(19) **Europäisches Patentamt**
**European Patent Office**
**Office européen des brevets**

(11) **EP 2 601 545 B1**

(12) **EUROPEAN PATENT SPECIFICATION**

(45) Date of publication and mention
of the grant of the patent:
**18.06.2014 Bulletin 2014/25**

(21) Application number: **11741272.6**

(22) Date of filing: **20.07.2011**

(51) Int Cl.:
**G01V 11/00** (2006.01)

(86) International application number:
**PCT/GB2011/051373**

(87) International publication number:
**WO 2012/017223 (09.02.2012 Gazette 2012/06)**

(54) **SYSTEMS AND METHODS FOR PROCESSING GEOPHYSICAL DATA**

SYSTEME UND VERFAHREN ZUR VERARBEITUNG VON GEOPHYSIKALISCHEN DATEN

SYSTÈMES ET PROCÉDÉS DE TRAITEMENT DE DONNÉES GÉOPHYSIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.08.2010 GB 201013091**

(43) Date of publication of application:
**12.06.2013 Bulletin 2013/24**

(73) Proprietor: **Arkex Limited**
**Cambridgeshire CB4 0WZ (GB)**

(72) Inventors:
• **DYER, Neil James**
  **Cambridge Cambridgeshire CB4 0WZ (GB)**
• **COSTA E SILVA, Mercia Betania**
  **Cambridge Cambridgeshire CB4 0WZ (GB)**

(74) Representative: **Gwilt, Julia Louise**
**Marks & Clerk LLP**
**62-68 Hills Road**
**Cambridge**
**CB2 1LA (GB)**

(56) References cited:
**US-A1- 2003 060 981     US-B1- 6 278 948**

• **Nancy Natek: "Constraints on the SCEC 3D
  Velocity Model from Gravity Data:Two-
  Dimensional Gravity Modeling of the Central and
  EasternTransverse Ranges in the Los Angeles
  Region", University of New Mexico , 29
  September 2000 (2000-09-29), pages 1-35,
  XP002662167, Retrieved from the Internet: URL:
  http://www.scec.org/education/educatio n/
  internships/00/natek/natekreport.pdf [retrieved
  on 2007-07-13]**
• **DRUMMOND, HOBBS AND GOLEY: "The effects
  of out-of-plane seismic energy on reflections
  incrustal-scale 2D seismic sections",
  TECTONOPHYSICS, vol. 388, 26 August 2004
  (2004-08-26), pages 213-224, XP002662168,**

**Description**

Field of the invention

This invention relates to methods, apparatus, and computer program code for processing geophysical data, for example potential field data from a potential field survey to provide a representation of the underlying geology of the surveyed region.

Background to the invention

A potential field survey is performed by measuring potential field data which, for a gravity survey, may comprise one or more of gravimeter data (measuring gravity field) or gravity gradiometer data (measuring gravity field gradient), vector magnetometer data, true magnetic gradiometer data, and other types of data well-known to those skilled in the art. A common aim of a geophysical potential field survey is to search for signatures which potentially indicate valuable mineral deposits.

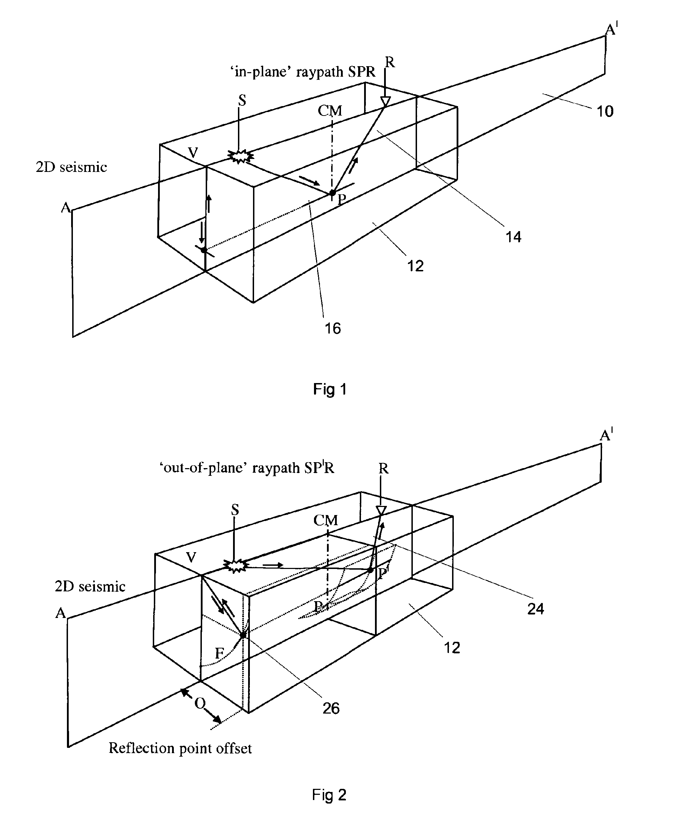

An alternative type of survey uses seismic measurements in which a signal is generated by a source and its reflections monitored by a plurality of seismometers which are typically closely spaced. One type of seismic survey is illustrated in Figure 1 which shows the generation of a 2D seismic section (line AA') by propagating an acoustic or acoustic-elastic wave 14 from a source S to at least one receiver R through a 3D impedance field 12 (also termed volume V). The centre point between the source S and receiver R alone line AA' is marked CM. The wave 14 propagates in all directions from the source S and reflects back from a point P on a suitably oriented interface 16 between regions of different impedance. For clarity, only one receiver and one interface are shown in Figure 1 but there are generally a plurality of receivers and interfaces. The receivers record the movement or pressure variation as the wave passes. When seismic data is recorded in 2D, such as along line AA', the assumption is generally made that the reflected rays travel in a vertical plane 10 intersecting AA'. This is illustrated by the lines from the source S to receiver R travelling via P marked with arrows. The arrows on the end face represent the ray path viewed along the axis of the seismic line AA'. Thus, the downward arrow on the end face represents the ray path from S to P and the upward arrow, the ray path from P to R. The ray path is clearly 'in the plane' of the seismic line.

It is known to combine the survey results from potential field surveys with seismic survey results. For example, in US 2003/0060981 a parameterised model is derived using an inversion process on potential field data. Seismic data may be used as an additional constraint in running the inversion process again. This process of inversion followed by seismic imaging followed by another inversion and seismic imaging step may be repeated until the results of the potential field inversion and seismic imaging processes converge to a single answer.

For 2-D seismic surveying as shown in Figure 1, in order for a vertical plane to be the exclusive travel path for the rays reflected back to the line AA', the regions of constant impedance must be arranged such that they have no dip in the direction orthogonal to AA' (i.e. the layers of different material in the subsurface structure must be horizontal). It is commonplace for the subsurface structure to have 3D variation which violates this assumption. Accordingly, the assumption is often incorrect. This incorrect assumption is not addressed in the known prior art and thus the applicant has recognised a need for improved surveying techniques.

US2003/060981 and WO03/023447 to Conocophillips Company describe non-linear constrained inversion methods to determine base of salt interface from gravity and gravity tensor data. US2004/172199 and WO00/60379 to Conocophillips Company describe modelling gravity and gravity tensor data using Poisson's equation for airborne, surface and borehole applications.

Statement of the invention

According to a first aspect of the invention, there is provided a method of processing geophysical data from a survey of a surveyed region of the earth to provide a representation of the underlying geology of said surveyed region, the method comprising:

inputting seismic data for said surveyed region,
generating a first representation depicting a plurality of reflection interfaces of said underlying geology of said surveyed region using said input seismic data,
inputting potential field data for said surveyed region,
generating a second representation depicting a plurality of density interfaces of said underlying geology of said surveyed region using said input potential field data;
combining said representation of said plurality of density interfaces with said representation of said plurality of reflection interfaces to reposition at least one of said plurality of reflection interfaces and

generating a final representation depicting said underlying geology of said surveyed region using said combined first and second representations.

According to the second aspect of the invention, there is provided apparatus for processing geophysical data from a survey of a surveyed region of the earth to provide a three-dimensional representation of the underlying geology of said surveyed region, the apparatus comprising:

a first input for inputting seismic data for said surveyed region,
a second input for inputting potential field data for said surveyed region and
a processor which is configured to
generate a first representation depicting a plurality of reflection interfaces of said underlying geology of said surveyed region using said input seismic data,
generate a second representation depicting a plurality of density interfaces of said underlying geology of said surveyed region using said input potential field data;
combine said representation of said plurality of density interfaces with said representation of said plurality of reflection interfaces to reposition at least one said reflection interfaces and
generate a final representation depicting said underlying geology of said surveyed region using said combined first and second representations.

The invention allows the initial representation derived through the interpretation of seismic data to be improved by including the potential field data. As explained in more detail below, the seismic data does not include the necessary information to improve the interpretation.

The following features apply to both aspects.

The first and second representations may be combined by determining at least one reflection interface which is not compatible with said input seismic data. There may be a plurality of such incompatible reflection interfaces. A locus of possible reflection positions may be determined for each said at least one incompatible reflection interface. Each of said loci may be determined using any suitable migration operator, e.g.

$$\frac{(x - x_0)(x - x_0 - x_s - x_g)}{(Vt)^2} + \frac{(y - y_0)(y - y_0 - y_s - y_g) + \Delta z(2z_0 + \Delta z)}{(Vt)^2 - (x_s - x_g)^2 - (y_s - y_g)^2} = 0 \quad ,$$

where: $\Delta z = z - z_0$,

V(z) is the seismic velocity varying with depth z
t is the travel time from source (position $(x_s, y_s, 0)$) to receiver (position $(x_g, y_g, 0)$), the scatter point is $(x_0, y_0, z_0)$, and.

$$x(p) = \int_{z_1}^{z_2} \frac{pV(z)}{\sqrt{1 - p^2 V^2(z)}} dz \quad ,$$

$$t(p) = \int_{z_1}^{z_2} \frac{dz}{V(z)\sqrt{1 - p^2 V^2(z)}},$$

Where

$$p = \frac{\sin \theta(z)}{V(z)} \quad .$$

An intersection of each of said loci of possible reflection positions with at least one of said density interfaces may be determined. It is the intersection between compatible reflection interfaces and density interfaces which is determined. Compatibility may be determined using the empirical relationship between velocity and density known as Gardner's relationship or a using a modification of Gardner's relationship or using any equivalent alternative.

Where there is a plurality of said incompatible reflection interfaces, said intersection between said plurality of loci of possible reflection positions and said at least one density interface may be a surface. It is a surface rather than a line to recognise that there is uncertainty inherent in the construction used to derive the loci.

Said input seismic data is preferably 2-D seismic data and may be collected along a line **A-A$^I$**.

The first representation may be a 2-D velocity model comprising a plurality of layers each having its associated velocity and a plurality of boundaries between said plurality of layers which form said plurality of reflection interfaces. As explained above, such a first representation is generally determined using the assumption that seismic data collected along the line **A-A$^I$** has travelled within a vertical plane below the line **A-A$^I$** and thus the reflection interface is located within said vertical plane. However, in practice, incompatible reflection interfaces are not located within said plane but are offset by a distance known as the cross line offset from said plane. Nevertheless, where said 2-D velocity model shows the vertical plane below line **A-A$^I$,** said out-of plane reflection interfaces are shown as interfaces within said 2-D velocity model. The position of said interfaces within said model is thus incorrect.

The final representation may be an amended version of said first representation. Where said final representation is a 2-D velocity model showing the vertical plane below line **A-A$^I$,** said reflection interface must be represented within said model even though it lies outside this plane. Said at least one of said plurality of reflection interfaces may thus be repositioned to lie on an intersection between a density interface of said second representation and said vertical plane below line **A-A$^I$**. Such a revised model is more accurate than the first representation using seismic data alone even though the out-of-plane reflection interface is still shown as lying within the 2-D plane of the model.

The potential field data may be gravity and/or gravity gradiometry data. The potential field survey may be conducted from a vessel or aircraft which may be equipped with a range of geophysical measurement equipment including one or more potential field measurement instruments, for example vector gravimeter, gravity gradiometer, magnetometer, magnetic gradiometer or other instruments.

The second representation may be a 3-D density model having a plurality of layers each with its associated density. The second representation may be generated using constraints from said first representation. The final representation may be a 3-D representation of the underlying geology based on said 3-D second representation with said at least one reflection interface repositioned to line along said intersection surface of said plurality of loci of possible reflection positions and said at least one density interface.

The method described above may be used to determine the location of oil, hydrocarbons or other similar valuable mineral deposits.

The aircraft or vessel may be fitted with any of a range of additional standard airborne geophysical survey instrumentation such as instrumentation for: GPS, DGPS, altimeter, altitude measurement, pressure measurement, hyperspectral scanner, an electromagnetic measurement (EM), a Time Domain Electromagnetic system (TDEM), a vector magnetometer, accelerometer, gravimeter, and other devices including other potential field measurement devices.

The outputs from instrumentation may be corrected using instrumentation in a fixed or movable base station, for example according to best practice at the time. Such equipment may include GPS and magnetic instrumentation and high quality land gravimeters. Data collected according to any of the above methods may be combined with any ground based or satellite based survey data to help improve the analysis, such data including terrain, spectral, magnetic or other data.

The invention further provides processor control code to implement the above-described methods, in particular on a data carrier such as a disk, CD- or DVD-ROM, programmed memory such as read-only memory (Firmware), or on a data carrier such as an optical or electrical signal carrier. Code (and/or data) to implement embodiments of the invention may comprise source, object or executable code in a conventional programming language (interpreted or compiled) such as C, or assembly code, code for setting up or controlling an ASIC (Application Specific Integrated Circuit) or FPGA (Field Programmable Gate Array), or code for a hardware description language such as Verilog (Trade Mark) or VHDL (Very high speed integrated circuit Hardware Description Language). As the skilled person will appreciate such code and/or data may be distributed between a plurality of coupled components in communication with one another.

Brief description of drawings

These and other aspects of the invention will now be further described, by way of example only, with reference to the accompanying figures in which:

Figure 1 is a schematic illustration of an "in-plane" reflected raypath travelling through a 3D impedance field;
Figure 2 is a schematic illustration of an "out-of-plane" reflected raypath travelling through a 3D impedance field;
Figure 3 is a flowchart of the method for improving seismic surveying;

Figures 4a and 4b are two schematic illustrations of the end faces of the 3D impedance field of Figure 2 (i.e. imaging planes) showing rays travelling outside the 2d seismic region (x=0);

Figure 5 is a schematic illustration showing the combination of the representations generated by seismic data and potential field data;

Figure 6 is a schematic drawing of a vessel for conducting a survey.

Detailed description of drawings

As explained above with reference to Figure 1, in order for a vertical plane to be the exclusive travel path for the rays reflected back to the line AA', the regions of constant impedance must be arranged such that they have no dip in the direction orthogonal to AA'. However, this is not always the case. Figure 2 illustrates a coherent reflection from an 'out-of-plane' event appearing on the 2D seismic section AA'. If such a reflection is modelled using the assumption that the event (i.e. reflection surface) is in-plane, the event will generally be mispositioned. Accordingly, the seismic velocity derived from these events is likely to be an unrealistic value. This is because the geometrical constructions enabling the reduction of the seismic recording to a section have the 'in-plane' assumption embedded within them.

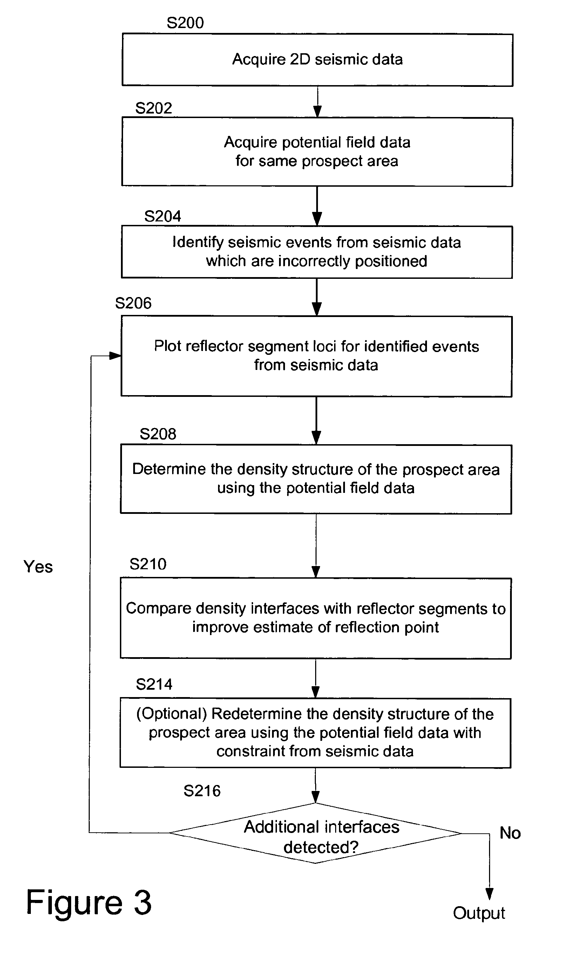

The process for improving the estimation of the seismic event is illustrated in the flow chart of Figure 3; a seismic event is a reflection detected using seismic surveying. At step S200, 2-D seismic data is acquired for the area to be surveyed. Potential field data is also acquired for the same area (step S204). Potential field data may include electromagnetic data, magnetic data, gravity data and/or gravity gradiometry data. Then at step S204, the mispositioned seismic events are identified from the seismic data. This may be done by identifying the reflections which do not fit with the model generated by the seismic data. There may be multiple seismic events to be repositioned. At step S206, reflector segment loci which represent the reflection interfaces are plotted as described in more detail below.

Looking again at Figure 2, it is possible to approximate the raypath of energy that has traversed an 'out-of-plane' trajectory between source S and receiver R if the acoustic or acoustic-elastic velocity is known in the 3D impedance field 12. An out of plane raypath 24 is illustrated by the line from the source S to receiver R travelling via P' marked with arrows. The locus of possible reflection points (i.e. reflector segment locus) is indicated between points PP'. The locus PP' lies on a curved plane marked with dotted lines. The point P lies in the vertical plane 10 intersecting the 2D seismic section AA' directly underneath the centre point CM. The point P' lies in a plane parallel to the vertical plane 10 with the perpendicular distance between the two planes labelled "O". This distance is termed the reflection point offset.

In the simplest construction the velocity field is simplified by choosing a 1 D velocity function corresponding to the CMP position mid way between source and receiver. The raypath 24 travels to point P' which is offset from the vertical plane intersecting profile AA by a distance O. The set of possible reflection points F is constructed using a 2D migration algorithm arranged in the cross line direction. One of the possible reflection points 26 lies in the same plane as point P' which is parallel to the vertical plane 10. The arrows on the end face represent the raypath viewed along the axis of the seismic line AA'. Thus, the downward arrow on the end face represents the raypath from S to P' and the upward arrow, the raypath from P' to R. The raypath is clearly 'out of plane' of the seismic line.

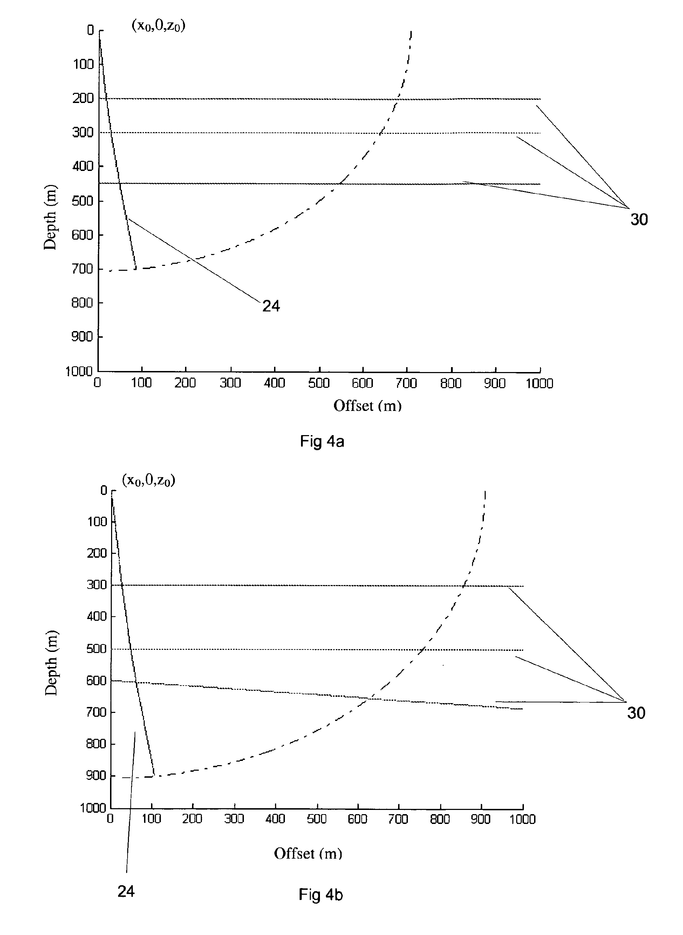

Figures 4a and 4b illustrates two different simple geological models generated from the seismic data and corresponding to views of the end face of volume V in Figure 2. The models are imaging planes of the geological composition in a plane perpendicular to the plane of the 2D seismic section AA'. Figures 4a and 4b plot reflection point offset (x-axis) against depth (z-axis). The reflection point offset is also known as the cross-line difference (i.e. perpendicular distance "O" from Figure 2). The 2D seismic line AA' of Figure 2 is represented by the y-axis (perpendicular to the plane of the Figures) with x=0. The generally horizontal lines 30 represent seismic interfaces (otherwise known as events) with the ray path 24 beginning at (0,0,0). The dashed lines represent the migration operator for a scatter point $(x_0, 0, z_0)$ with source and receiver positions defined by (0, 0, 0).

The raypaths 24 are traced obeying Snell's law (Sheriff and Geldart, 1995).

The ray path is defined by Eq.1 and travel time by Eq. 2:

$$x(p) = \int_{z_1}^{z_2} \frac{pV(z)}{\sqrt{1 - p^2 V^2(z)}} dz \text{,} \qquad \text{(Eq.1)}$$

$$t(p) = \int_{z_1}^{z_2} \frac{dz}{V(z)\sqrt{1 - p^2 V^2(z)}} \text{,} \qquad \text{(Eq.2)}$$

Where

$$p = \frac{\sin\theta(z)}{V(z)}.$$

and

V(z) is the seismic velocity varying with depth z

Eq.3 defines an analytic approximation of the migration operator (Hu, 2000; Schusterand and Hu, 2000) considering a scatter point $(x_0,y_0,z_0)$, source position $(x_s,y_s,0)$, receiver position $(x_g,y_g,0)$ and a constant velocity model:

$$\frac{(x-x_0)(x-x_0-x_s-x_g)}{(Vt)^2} + \frac{(y-y_0)(y-y_0-y_s-y_g)+\Delta z(2z_0+\Delta z)}{(Vt)^2-(x_s-x_g)^2-(y_s-y_g)^2} = 0 \quad ,$$

(Eq.3)

where:

$$\Delta z = z - z_0,$$

V is the velocity of the model and
t is the travel time from source to receiver.

Since Eq.3 uses the assumption of constant velocity, the dashed curves on Figure 4a and 4b were computed using the RMS velocity from the source to the receiver.

There are many other different migration operators which may be used to generate the reflection point loci.

Figure 4a illustrates the simplest model in which all the interfaces 30 are horizontal and have a constant seismic velocity between each interface. By contrast, Figure 4b shows a more complex geometry having a known variability in the overlying velocity field. The variability is illustrated by showing the deepest interface with a spatial variation. Both Figure 4a and 4b show the raypath and interfaces in an end face of the volume when viewed along the axis of the seismic line AA' (i.e. show the initial representation of the reflection interfaces in 2-D). In Figure 4a, the interfaces at depths of 200, 300 and 450m have been determined and the next step is to determine the interface at 700m using the reflection point locus. In Figure 4b, the interfaces at depths of 300, 500 and 600m have been determined. The interface at 900m is being determined by the reflection point locus.

This 2-D geometric construction yields a set of plausible reflection points distributed normal to the vertical plane intersecting AA'. Without additional constraint no further refinement of the estimate of the reflector position may be made from the seismic data alone.

Returning to Figure 3, the next step S208 is to determine the density structure of the prospect area using the potential field data. The different types of data may all be used in the same way as long as a relationship is derived to relate the velocity field and the material property collected in the data, at least locally. The relationship may be local, consistent along the line AA', consistent throughout the survey or consistent on a greater spatial scale. The construction of the density structure in volume V may be made either by interactive, iterative modelling and comparison of calculated model gravity responses with the observed values or by inversion of the gravity observations where suitable constraint allows. Processing techniques developed by the present applicant which are particularly useful for processing gravity gradient data are taught in WO2009/092992, WO2009/016348, WO2008/117081, WO2008/93139, WO2007/085875 and WO2007/012895. These applications are all incorporated herein by reference.

At step S210, the set of reflector segments may be combined with the set of density interfaces derived from the interpretation of a gravity or gravity gradiometry survey acquired over volume V. Given that acoustic impedance I is the product of velocity $v$ and density p, a reflecting interface implies an impedance contrast is present:

$$I - v_i \rho_i \qquad \text{(eq. 4)}$$

It is likely that a density interface, a velocity interface and therefore an impedance contrast are co-located due to the empirical relationship between velocity and density observed and documented as Gardner's relationship:

$$\rho = 0.31 v^{0.2} \qquad \text{(eq. 5)}$$

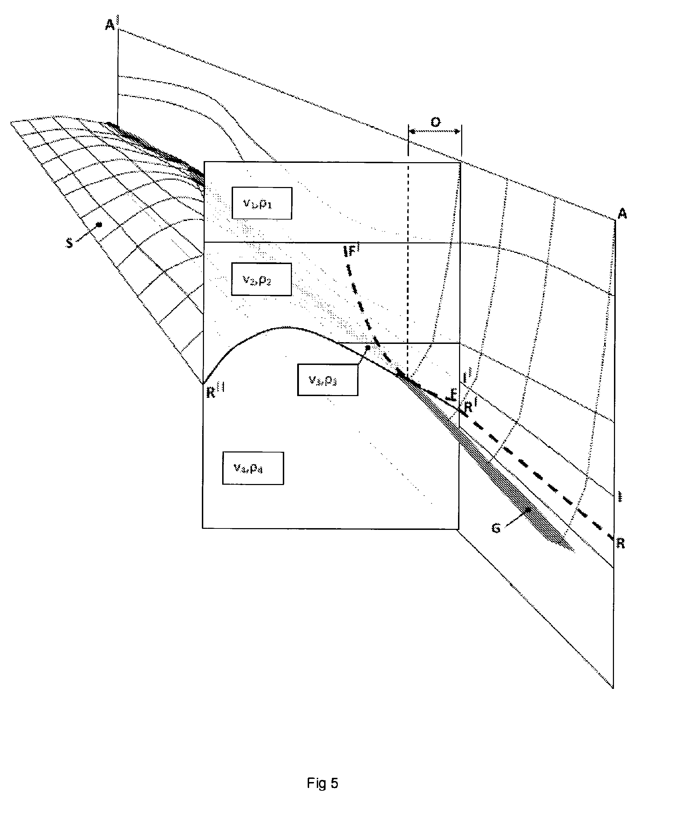

As shown in Figure 5, where these two sets of interfaces intersect the two models are compatible and thus an improved estimate of the reflection point position can be inferred. Figure 5 shows surface **S** which is the interface derived from gravity or gravity gradient field interpretation. Surface **S** intersects imaging plane **M** (this is the plane shown for example in Figure 4a or 4b) on line $R^I$-$R^{II}$.

The imaging plane **M** has a velocity model with four layers each having different layer velocities $v_1$, $v_2$, $v_3$, $v_4$. The velocities $v_n$ are compatible with the densities $\rho_n$ used in the gravity or gravity gradiometry interpretation. The interface between the top two layers is horizontal but the other interfaces are more complex. **F-F$^I$** is the locus of possible reflection positions for common midpoint position CM on line **A-A$^I$**. This locus is calculated, as described above, from the seismic data using the velocity model at position CM.

There are multiple reflections under consideration and hence multiple midpoint positions and multiple loci. Surface G is the intersection between surface S and the plurality of loci **F-F$^I$** for all common midpoint positions along **A-A$^I$**. It is a surface rather than a line to recognise that there is uncertainty inherent in the ray-path construction used to derive the loci **F-F$^I$** and the interpretation of the gravity or gravity gradient. Surface G is offset from line **A-A$^I$** by offset O, a variable function of position along **A-A$^I$**. This offset is also known as the cross-line distance.

Line **I-I$^I$** is the position of the reflection event on the 2D seismic section determined using standard 2-D seismic techniques which assume in-plane reflection. However, using the combination of the seismic data and the potential fields modelling, the reflection event is actually in surface **G.** The output may take the form of a plot in 3D of true reflection positions located on the surface created by the interpreter, i.e. a plot of surface **G.** Such an output method fits within interpretation methods for potential field data such as those taught in WO2009/092992, WO2009/016348, WO2008/117081, WO2008/93139, WO2007/085875 and WO2007/012895. Alternatively, there may be a 2-D output showing the true position of the interface within the plane of the seismic section. This is illustrated in Figure 5 by line **R-R$^I$** which is the repositioned event corresponding to the intersection of the vertical plane containing **A-A$^I$** and the surface **S.** Line **R-R$^I$** is not coincident with the seismic event. Such an output method is a way of delivering the result back to the seismic practice. Both are important methods for outputting information.

Returning to Figure 3, as shown at optional step S214, when using inversion techniques, the 'in-plane' seismic data and reflector segment loci may be added to the inversion algorithm to provide a constraint. Constrained inversion of potential field data is well described in published literature, for example the description and bibliography contained in Dobrin and Savit (1988), P 626-632 and the description given in Blakely (1996) chapter 10. In this context, constraint refers to the prevention of a non-linear inversion scheme moving from a set of points on an interface which are classified as constrained. Conventionally an inversion may be given 'line constraints' where the position of the interface is defined by seismic data, or 'point constraints' where position is defined by a borehole measurement. In the proposed scheme, a set of permissible interface positions is provided and the inversion allowed to position a surface to intersect this set. The set of positions corresponds to the loci illustrated in Figures 4a and 4b for each position on the seismic line.

The inversion scheme employed (at step S208 and/or step S212) may be a non-linear inversion solving for interface positions using a set of analytic functions to calculate the updated position of the interface from the difference between observed and calculated measurements of the gravity field. Alternatively the inversion may be a stochastic inversion, creating a probability map of the likely positions of the interfaces from a set of variations about an input model whose forward calculated response is compared to the observations.

A simplified '1D' inversion, aiming to input seismic velocities and the gravity gradient map and output reflector positions is also anticipated using the analytic functions given in the paper 'Dip Angle determination of fault planes from Gravity data' by E.M Abdelrahman et al, PAGEOPH, Vol 130, No4 (1989). Here we would make the 1 D assumption for all material above the interface in question (i.e. interfaces are all horizontal, velocities laterally constant) and solve for the equality of the tangent to the reflector locus and the dip angle calculated from the difference between gravity minimum and gravity maximum and the separation of the maximum and minimum.

Multiple reflecting interfaces may be modelled using a layer downwards approach. Thus as shown in Figure 3, at step S216, we determine whether or not any additional reflecting interfaces have been detected and if so, repeat steps S206 to end until the results can be output. The final output is an improvement in positioning the reflection point - the source of the event on a seismic section. The improvement may be expressed as the cross line displacement of the reflection point. This information is unavailable from 2D seismic data alone.

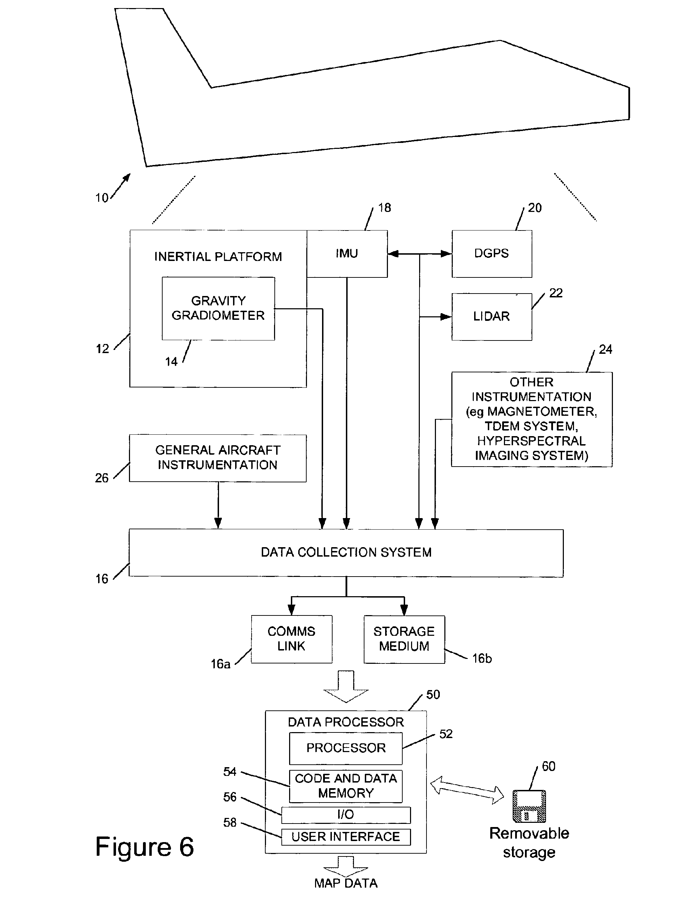

Referring now to Figure 6, this shows an example of an aircraft 10 for conducting a potential field survey to obtain data for processing in accordance with a method as described above. As set out above, the survey may also be a marine survey in which case the aircraft may be replaced by a boat. The aircraft 10 or other vessel for conducting the survey comprises an inertial platform 12 on which is mounted a gravity gradiometer 14 (and/or vector magnetometer) which provides potential field survey data to a data collection system 16. The inertial platform 12 is fitted with an inertial measurement unit (IMU) 18 which also provides data to data collection system 16 typically comprising attitude data (for example, pitch, roll and yaw data), angular rate and angular acceleration data, and aircraft acceleration data. The aircraft is also equipped with a differential GPS system 20 and a LIDAR system 22 or similar to provide data on the height of the aircraft above the underlying terrain. Position and time data are preferably obtained from (D)GPS, optionally in combination with the IMU for accuracy.

The aircraft 10 may also be equipped with other instrumentation 24 such as a magnetometer, a TDEM (Time Domain Electromagnetic System) system and/or a hyperspectral imaging system, again feeding into the data collection system. The data collection system 16 also has an input from general aircraft instrumentation 26 which may comprise, for example, an altimeter, air and/or ground speed data and the like. The data collection system 16 may provide some initial data pre-processing, for example to correct the LIDAR data for aircraft motion and/or to combine data from the IMU 18 and DGPS 20. The data collection system 16 may be provided with a communications link 16a and/or non-volatile storage 16b to enable the collected potential field and position data to be stored for later processing. A network interface (not shown) may also be provided.

Data processing to generate map data for the potential field survey is generally (but not necessarily) carried out offline, sometimes in a different country to that where the survey data was collected. As illustrated a data processing system 50 comprises a processor 52 coupled to code and data memory 54, an input/output system 56 (for example comprising interfaces for a network and/or storage media and/or other communications), and to a user interface 58 for example comprising a keyboard and/or mouse. The code and/or data stored in memory 54 may be provided on a removable storage medium 60. In operation the data includes data collected from the potential field survey and the code comprises code to process this data to generate map data.

In this specification we will refer to airborne surveys, and more particularly to gravity gradient surveys. However the techniques we describe are not limited to these types of survey and may be applied to other surveys including other potential field surveys. Potential field data includes, but is not limited to, gravimeter data, gravity gradiometer data, vector magnetometer data and true magnetic gradiometer data. Such data is characterised mathematically by a series of relationships which govern how the quantities vary as a function of space and how different types of measurement are related. The choice of instrumentation comes down simply to which instrument measures the desired quantity with the largest signal to noise. Elements and representations of a potential field may be derived from a scalar quantity.

For gravity, the relevant potential is the gravity scalar potential, $\Phi(r)$, defined as

$$\Phi(r) = \iiint \frac{G\rho(r')}{|r-r'|} d^3 r'$$

Where $r, \rho(r'), G$ are respectively, the position of measurement of the gravity field, the mass density at location r', and the gravitational constant. The gravitational force, which is how the gravitational field is experienced, is the spatial derivative of the scalar potential. Gravity is a vector in that it has directionality as is well known - gravity acts downwards. It is represented by three components with respect to any chosen Cartesian coordinate system as:

$$g = \left(g_x, g_y, g_z\right) = \left(\frac{\partial \Phi(r)}{\partial x}, \frac{\partial \Phi(r)}{\partial y}, \frac{\partial \Phi(r)}{\partial z}\right)$$

Each of these three components varies in each of the three directions and the nine quantities so generated form the Gravity gradient tensor:

$$G = \begin{pmatrix} G_{xx} & G_{xy} & G_{xz} \\ G_{yx} & G_{yy} & G_{yz} \\ G_{zx} & G_{zy} & G_{zz} \end{pmatrix} = \begin{pmatrix} \dfrac{\partial}{\partial x}\dfrac{\partial \Phi(r)}{\partial x} & \dfrac{\partial}{\partial x}\dfrac{\partial \Phi(r)}{\partial y} & \dfrac{\partial}{\partial x}\dfrac{\partial \Phi(r)}{\partial z} \\ \dfrac{\partial}{\partial y}\dfrac{\partial \Phi(r)}{\partial x} & \dfrac{\partial}{\partial y}\dfrac{\partial \Phi(r)}{\partial y} & \dfrac{\partial}{\partial y}\dfrac{\partial \Phi(r)}{\partial zx} \\ \dfrac{\partial}{\partial z}\dfrac{\partial \Phi(r)}{\partial x} & \dfrac{\partial}{\partial z}\dfrac{\partial \Phi(r)}{\partial y} & \dfrac{\partial}{\partial z}\dfrac{\partial \Phi(r)}{\partial z} \end{pmatrix}$$

The mathematical theory of potential fields is well established - the fundamental equations and relationships follow from analysis of the properties of the scalar potential function, its derivatives, its Fourier transforms and other mathematical quantities.

The 1 D construction illustrated in figure 1 and 2 assumes that the velocity field orthogonal to the seismic line is constant throughout the volume V between source and receiver points. In this case the construction of the locus of reflector segments is possible using analytic equations 1, 2 and 3. As an alternative, a curved ray formulation of equation 3 may be constructed where the dip of the reflecting interface exceeds ~30 degrees.

In the situation that a better estimate of the velocity field in the portion of volume V traversed by the ray before reflection is available (for instance from a preliminary inversion of the gravity or gravity gradiometry data) then the loci may be constructed using ray tracing through the model.

No doubt many other effective alternatives will occur to the skilled person. It will be understood that the invention is not limited to the described embodiments and encompasses modifications apparent to those skilled in the art lying within the scope of the claims appended hereto.

## Claims

1. A method of processing geophysical data from a survey of a surveyed region of the earth to provide a representation of the underlying geology of said surveyed region, the method comprising:

    inputting 2-D seismic data for said surveyed region, wherein said 2-D seismic data defines a vertical plane (10) below said surveyed region,
    generating a first representation depicting a plurality of reflection interfaces of said underlying geology of said surveyed region using said input seismic data,
    inputting potential field data for said surveyed region,
    generating a second representation depicting a plurality of density interfaces of said underlying geology of said surveyed region using said input potential field data;
    combining said second representation of said plurality of density interfaces with said first representation of said plurality of reflection interfaces to reposition at least one of said plurality of reflection interfaces, wherein said combining further comprises:

        identifying at least one incompatible reflection interface which lies out of the said vertical plane defined by said input 2-D seismic data;
        determining a locus of possible reflection positions for said at least one incompatible reflection interface; and
        determining the intersection of said locus of possible reflection positions with at least one of said density interfaces and repositioning said at least one incompatible reflection interface with reference to said intersection; and

    generating a final representation depicting said underlying geology of said surveyed region using said combined first and second representations.

2. A method according to claim 1, wherein said combining comprises determining a plurality of reflection interfaces which are not compatible with said input data, determining a locus of possible reflection positions for each of said plurality of incompatible reflection interfaces wherein said intersection between said plurality of loci of possible reflection positions and said at least one density interface is a surface.

3. A method according to any one of the preceding claims, comprising inputting seismic data collected along a line **A-A^I** and generating the first representation as a 2-D velocity model comprising a plurality of layers each of which has its associated velocity and a plurality of boundaries between said plurality of layers which form said plurality of reflection interfaces wherein said at least one of said plurality of reflection interfaces which is repositioned does not lie in a vertical plane below line **A-A^I**.

4. A method according to claim 3, wherein the final representation is an amended version of said first representation in which at least one of said plurality of reflection interfaces has been repositioned within the 2-D velocity model to lie on an intersection between a density interface of said second representation and a vertical plane below line **A-A^I**.

5. A method according to any one of the preceding claims, wherein the potential field data is gravity and/or gravity gradiometry data.

6. A method according to any one of the preceding claims, wherein the second representation is a 3-D density model having a plurality of layers each with its associated density.

7. A method according to any one of the preceding claims, wherein the second representation is generated using constraints from said first representation.

8. A carrier carrying processor control code to when running on a processor implement the method of any one of the preceding claims.

9. Apparatus for processing geophysical data from a survey of a surveyed region of the earth to provide a three-dimensional representation of the underlying geology of said surveyed region, the apparatus comprising:

   a first input for inputting seismic data for said surveyed region, wherein said seismic data defines a vertical plane (10) below said surveyed region,
   a second input for inputting potential field data for said surveyed region and
   a processor which is configured to
   generate a first representation depicting a plurality of reflection interfaces of said underlying geology of said surveyed region using said input seismic data,
   generate a second representation depicting a plurality of density interfaces of said underlying geology of said surveyed region using said input potential field data;
   combine said second representation of said plurality of density interfaces with said first representation of said plurality of reflection interfaces to reposition at least one said reflection interfaces, wherein said processor is further configured to:

      identify at least one incompatible reflection interface which lies out of the said vertical plane defined by said input seismic data;
      determine a locus of possible reflection positions for said at least one incompatible reflection interface; and
      determine the intersection of said locus of possible reflection positions with at least one of said density interfaces and repositioning said at least one incompatible reflection interface with reference to said intersection; and

   generate a final representation depicting said underlying geology of said surveyed region using said combined first and second representations.

**Patentansprüche**

1. Verfahren zur Verarbeitung geophysikalischer Daten von einer Untersuchung einer untersuchten Region der Erde, um eine Darstellung der zugrunde liegenden Geologie der untersuchten Region bereitzustellen, wobei das Verfahren umfasst:

   Eingeben seismischer 2-D-Daten für die untersuchte Region, wobei die seismischen 2-D-Daten eine vertikale Ebene (10) unterhalb der untersuchten Region definieren,
   Erzeugen einer ersten Darstellung, die eine Vielzahl von Reflexionsgrenzflächen der zugrunde liegenden Geologie der untersuchten Region veranschaulicht, unter Verwendung der eingegebenen seismischen Daten,

Eingeben von Potentialfelddaten für die untersuchte Region,
Erzeugen einer zweiten Darstellung, die eine Vielzahl von Dichtegrenzflächen der zugrunde liegenden Geologie der untersuchten Region veranschaulicht, unter Verwendung der eingegebenen Potentialfelddaten,
Kombinieren der zweiten Darstellung der Vielzahl von Dichtegrenzflächen mit der ersten Darstellung der Vielzahl von Reflexionsgrenzflächen, um mindestens eine aus der Vielzahl von Reflexionsgrenzflächen neu zu positionieren, wobei das Kombinieren ferner umfasst:

Identifizieren mindestens einer inkompatiblen Reflexionsgrenzfläche, die außerhalb der vertikalen Ebene liegt, die durch die eingegebenen seismischen 2-D-Daten definiert ist;
Bestimmen einer Ortskurve möglicher Reflexionspositionen für die mindestens eine inkompatible Reflexionsgrenzfläche; und
Bestimmen der Überschneidung der Ortskurve der möglichen Reflexionspositionen mit mindestens einer der Dichtegrenzflächen und Neupositionieren der zumindest einen inkompatiblen Reflexionsgrenzfläche in Bezug auf die Überschneidung; und

Erzeugen einer endgültigen Darstellung, die die zugrunde liegende Geologie der untersuchten Region veranschaulicht, unter Verwendung der kombinierten ersten und zweiten Darstellung.

2. Verfahren nach Anspruch 1, wobei das Kombinieren umfasst: Bestimmen einer Vielzahl von Reflexionsgrenzflächen, die nicht mit den Eingabedaten kompatibel sind, Bestimmen einer Ortskurve möglicher Reflexionspositionen für jede aus der Vielzahl von inkompatiblen Reflexionsgrenzflächen, wobei die Überschneidung zwischen der Vielzahl von Ortskurven möglicher Reflektionspositionen und der mindestens einen Dichtegrenzfläche eine Fläche ist.

3. Verfahren nach einem der vorhergehenden Ansprüche, umfassend: Eingeben von entlang einer Linie A-A$^\mathrm{I}$ gesammelten seismischen Daten und Erzeugen der ersten Darstellung als 2D-Geschwindigkeitsmodell, das eine Vielzahl von Schichten, die jeweils ihre zugehörige Geschwindigkeit haben, und eine Vielzahl von Grenzen zwischen der Vielzahl von Schichten, die die Vielzahl von Reflexionsgrenzflächen bilden, umfasst, wobei die mindestens eine aus der Vielzahl von Reflexionsgrenzflächen, die neu positioniert ist, nicht in einer vertikalen Ebene unterhalb der Linie A-A$^\mathrm{I}$ liegt.

4. Verfahren nach Anspruch 3, wobei die endgültige Darstellung eine geänderte Version der ersten Darstellung ist, in der mindestens eine aus der Vielzahl von Reflexionsgrenzflächen im 2-D-Geschwindigkeitsmodell neu positioniert worden ist, um an einer Überschneidung zwischen einer Dichtegrenzfläche der zweiten Darstellung und einer vertikalen Ebene unterhalb der Linie A-A$^\mathrm{I}$ zu liegen.

5. Verfahren nach einem der vorhergehenden Ansprüche, wobei die Potentialfelddaten Schwerkraft- und/oder Schwerkraft-Gradiometriedaten sind.

6. Verfahren nach einem der vorhergehenden Ansprüche, wobei die zweite Darstellung ein 3-D-Dichtemodell mit einer Vielzahl von Schichten mit jeweils zugeordneter Dichte ist.

7. Verfahren nach einem der vorhergehenden Ansprüche, wobei die zweite Darstellung unter Verwendung von Randbedingungen aus der ersten Darstellung erzeugt wird.

8. Träger, der Prozessorsteuerungscode trägt, um bei Ausführung auf einem Prozessor das Verfahren nach einem der vorhergehenden Ansprüche zu implementieren.

9. Vorrichtung zur Verarbeitung geophysikalischer Daten von einer Untersuchung einer untersuchten Region der Erde, um eine dreidimensionale Darstellung der zugrunde liegenden Geologie der untersuchten Region bereitzustellen, wobei die Vorrichtung umfasst:

einen ersten Eingang zur Eingabe von seismischen Daten für die untersuchte Region, wobei die seismischen Daten eine vertikale Ebene (10) unterhalb der untersuchten Region definieren,
einen zweiten Eingang zur Eingabe von Potentialfelddaten für die untersuchte Region und
einen Prozessor, der dafür konfiguriert ist,
eine erste Darstellung, die eine Vielzahl von Reflexionsgrenzflächen der zugrunde liegenden Geologie der untersuchten Region veranschaulicht, unter Verwendung der eingegebenen seismischen Daten zu erzeugen,
eine zweite Darstellung, die eine Vielzahl von Dichtegrenzflächen der zugrunde liegenden Geologie der untersuchten Region veranschaulicht, unter Verwendung der eingegebenen Potentialfelddaten zu erzeugen, die zweite Darstellung der Vielzahl von Dichtegrenzflächen mit der ersten Darstellung der Vielzahl von Reflexionsgrenzflächen zu kombinieren, um mindestens eine aus der Vielzahl von Reflexionsgrenzflächen neu zu positionieren, wobei der Prozessor ferner dafür konfiguriert ist:

mindestens eine inkompatible Reflexionsgrenzfläche zu identifizieren, die außerhalb der vertikalen Ebene liegt, die durch die eingegebenen seismischen Daten definiert ist;
eine Ortskurve möglicher Reflexionspositionen für die mindestens eine inkompatible Reflexionsgrenzfläche zu bestimmen; und
die Überschneidung der Ortskurve möglicher Reflexionspositionen mit mindestens einer der Dichtegrenzflächen zu bestimmen und die mindestens eine inkompatible Reflexionsgrenzfläche in Bezug auf die Überschneidung neu zu positionieren; und

eine endgültige Darstellung, die die zugrunde liegende Geologie der untersuchten Region veranschaulicht, unter Verwendung der kombinierten ersten und zweiten Darstellung zu erzeugen.

**Revendications**

1. Procédé de traitement de données géophysiques provenant d'une étude d'une zone terrestre prospectée, pour fournir une représentation de la géologie sous-jacente de ladite zone prospectée, le procédé consistant à :

appliquer des données séismologiques bidimensionnelles pour ladite zone prospectée, dans lequel lesdites données séismologiques bidimensionnelles définissent un plan vertical (10) sous ladite zone prospectée ;
générer une première représentation représentant une pluralité d'interfaces de réflexion de ladite géologie sous-jacente de ladite zone prospectée, en utilisant lesdites données séismologiques appliquées ;
appliquer des données de champ potentiel pour ladite zone prospectée ;
générer une seconde représentation représentant une pluralité d'interfaces de densité de ladite géologie sous-jacente de ladite zone prospectée, en utilisant lesdites données de champ potentiel appliquées;
combiner ladite seconde représentation de ladite pluralité d'interfaces de densité avec ladite première représentation de ladite pluralité d'interfaces de réflexion, en vue de repositionner au moins l'une de ladite pluralité d'interfaces de réflexion, dans lequel ladite combinaison consiste en outre à :

identifier au moins une interface de réflexion incompatible qui se trouve en dehors dudit plan vertical défini par lesdites données séismologiques bidimensionnelles appliquées ;
déterminer un lieu géométrique de positions de réflexion potentielles pour ladite au moins une interface de réflexion incompatible ; et
déterminer l'intersection dudit lieu géométrique de positions de réflexion potentielles avec au moins l'une desdites interfaces de densité, et repositionner ladite au moins une interface de réflexion incompatible en référence à ladite intersection ; et

générer une représentation finale représentant ladite géologie sous-jacente de ladite zone prospectée, en utilisant lesdites première et seconde représentations combinées.

2. Procédé selon la revendication 1, dans lequel ladite étape de combinaison consiste à déterminer une pluralité d'interfaces de réflexion non compatible avec lesdites données appliquées, et à déterminer un lieu géométrique de positions de réflexion potentielles pour chacune de ladite pluralité d'interfaces de réflexion incompatibles, dans lequel ladite intersection entre ladite pluralité de lieux géométriques de positions de réflexion potentielles et ladite au moins une interface de densité est une surface.

3. Procédé selon l'une quelconque des revendications précédentes, consistant à appliquer des données séismologiques collectées le long d'une ligne A-A$^I$, et à générer la première représentation sous la forme d'un modèle de vitesse bidimensionnel comprenant une pluralité de couches, dont chacune présente sa vitesse associée, et une pluralité de limites entre ladite pluralité de couches formant ladite pluralité d'interfaces de réflexion, dans lequel ladite au moins une interface de ladite pluralité d'interfaces de réflexion qui est repositionnée ne se trouve pas dans un plan vertical sous la ligne A-A$^I$.

4. Procédé selon la revendication 3, dans lequel la représentation finale est une version modifiée de ladite première représentation dans laquelle au moins l'une de ladite pluralité d'interfaces de réflexion a été repositionnée au sein du modèle de vitesse bidimensionnel, de manière à se trouver sur une intersection entre une interface de densité de ladite seconde représentation et un plan vertical sous la ligne A-A$^I$.

**5.** Procédé selon l'une quelconque des revendications précédentes, dans lequel les données de champ potentiel correspondent à des données de gravité et/ou à des données de gradiométrie de gravité.

**6.** Procédé selon l'une quelconque des revendications précédentes, dans lequel la seconde représentation correspond à un modèle de densité tridimensionnel présentant une pluralité de couches, dont chacune présente sa densité associée.

**7.** Procédé selon l'une quelconque des revendications précédentes, dans lequel la seconde représentation est générée en utilisant des contraintes de ladite première représentation.

**8.** Support portant un code de commande de processeur destiné à, lorsqu'il est exécuté sur un processeur, mettre en oeuvre le procédé selon l'une quelconque des revendications précédentes.

**9.** Appareil destiné à traiter des données géophysiques provenant d'une étude d'une zone terrestre prospectée, en vue de fournir une représentation tridimensionnelle de la géologie sous-jacente de ladite zone prospectée, l'appareil comportant :

une première entrée destinée à appliquer des données séismologiques pour ladite zone prospectée, dans lequel lesdites données séismologiques définissent un plan vertical (10) sous ladite zone prospectée ;
une seconde entrée destinée à appliquer des données de champ potentiel pour ladite zone prospectée ; et
un processeur configuré de manière à :

générer une première représentation représentant une pluralité d'interfaces de réflexion de ladite géologie sous-jacente de ladite zone prospectée, en utilisant lesdites données séismologiques appliquées ;
générer une seconde représentation représentant une pluralité d'interfaces de densité de ladite géologie sous-jacente de ladite zone prospectée, en utilisant lesdites données de champ potentiel appliquées;
combiner ladite seconde représentation de ladite pluralité d'interfaces de densité avec ladite première représentation de ladite pluralité d'interfaces de réflexion, en vue de repositionner au moins l'une desdites interfaces de réflexion, dans lequel ledit processeur est en outre configuré de manière à :

identifier au moins une interface de réflexion incompatible qui se trouve en dehors dudit plan vertical défini par lesdites données séismologiques appliquées ;
déterminer un lieu géométrique de positions de réflexion potentielles pour ladite au moins une interface de réflexion incompatible ; et
déterminer l'intersection dudit lieu géométrique de positions de réflexion potentielles avec au moins l'une desdites interfaces de densité, et repositionner ladite au moins une interface de réflexion incompatible en référence à ladite intersection ; et

générer une représentation finale représentant ladite géologie sous-jacente de ladite zone prospectée, en utilisant lesdites première et seconde représentations combinées.

'in-plane' raypath SPR

2D seismic

Fig 1

'out-of-plane' raypath SP'R

2D seismic

Reflection point offset

Fig 2

S200

Acquire 2D seismic data

S202

Acquire potential field data
for same prospect area

S204

Identify seismic events from seismic data
which are incorrectly positioned

S206

Plot reflector segment loci for identified events
from seismic data

S208

Determine the density structure of the prospect area
using the potential field data

Yes

S210

Compare density interfaces with reflector segments to
improve estimate of reflection point

S214

(Optional) Redetermine the density structure of the
prospect area using the potential field data with
constraint from seismic data

S216

Additional interfaces
detected?

No

Figure 3

Output

Fig 4a

Fig 4b

Fig 5

INERTIAL PLATFORM

IMU 18

DGPS 20

GRAVITY GRADIOMETER 14

12

LIDAR 22

OTHER INSTRUMENTATION (eg MAGNETOMETER, TDEM SYSTEM, HYPERSPECTRAL IMAGING SYSTEM) 24

GENERAL AIRCRAFT INSTRUMENTATION 26

DATA COLLECTION SYSTEM 16

COMMS LINK 16a

STORAGE MEDIUM 16b

DATA PROCESSOR 50

PROCESSOR 52

CODE AND DATA MEMORY 54

I/O 56

USER INTERFACE 58

Removable storage 60

MAP DATA

Figure 6

# EP 2 601 545 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20030060981 A
- US 2003060981 A
- WO 03023447 A
- US 2004172199 A
- WO 0060379 A
- WO 2009092992 A
- WO 2009016348 A
- WO 2008117081 A
- WO 200893139 A
- WO 2007085875 A
- WO 2007012895 A

### Non-patent literature cited in the description

- **E.M ABDELRAHMAN et al.** Dip Angle determination of fault planes from Gravity data. *PAGEOPH,* 1989, vol. 130 (4